# EUROPEAN PATENT SPECIFICATION

(11) **EP 3 850 052 B1**
(45) Date of publication and mention of the grant of the patent: **05.11.2025**
(21) Application number: 19770156.8
(22) Date of filing: 13.09.2019
(51) Int. Cl.: C09K 3/18, C11D 3/20, C11D 3/48, C11D 1/12

(54) **SCREEN WASH**
SCHEIBENWASCHMITTEL
LAVE-GLACE

(30) Priority: 14.09.2018 GB 201815007
(43) Date of publication of application: 21.07.2021
(73) Proprietor: Tetrosyl I-Tec Limited, Walmersley Bury Lancashire BL9 6RE (GB)
(72) Inventor: MELIA, Thomas Andrew, Rochdale, Lancashire OL16 1XB (GB)
(74) Representative: Marks & Clerk LLP
(86) International application number: PCT/GB2019/052560
(87) International publication number: WO 2020/053590

(56) References cited:
- US-A- 3 960 745
- US-B1- 8 633 145
- US-B2- 6 472 356
- ANONYMOUS: "Sterilium", 15 May 2016 (2016-05-15), XP055640617, Retrieved from the Internet <URL:https://web.archive.org/web/20160515171232if_/http://www.productcatalogue.bode-chemie.com/products/hands/product-information/sterillium_int.pdf> [retrieved on 20191108]

## Description

The present invention relates to a formulation for use in preparing a screen wash. The formulation has particular, but not exclusive use in preparing a screen wash suitable for application to a window (e.g. the windscreen) of a car, van, truck or other vehicle to ensure the driver's vision is not impaired by ice, dirt, or other visual obstacles.

### Background

Visual impairments on the windows of vehicles represent a serious safety hazard to the safety of drivers. Ice, grit, dirt and other particulates may form or settle on the window of a vehicle thus reducing the driver's view of the line of the road, or potential hazards in the path of the vehicle. To alleviate this problem, various formulation are known and can be applied to the window of the vehicle (or other surface from which ice, dirt, grit and/or other particulates are to be removed, such as wing mirrors) to improve visibility through the window or in the mirrors.

Such formulations may include screen wash formulations. Such screen wash formulations typically comprise water and a detergent, wherein the detergent is provided to solubilize dirt, grit, grease, and other particulates that settle on the window of a vehicle. Screen wash formulations are typically provided in a reservoir situated within the vehicle, and may be sprayed onto the screen by means of an electrical pump *via* jets mounted in the proximity of the window. Screen wash reservoirs are typically opaque, and as such it is difficult for the user to see into the reservoir to ascertain the level of screen wash present therein.

By virtue of their aqueous formulation, screen wash formulations are known to freeze during the winter season, and may additionally be subject to significant evaporation during the summer season. To address this issue, screen wash formulations are often provided for use in conjunction with a specific season. The user of a vehicle is thus required to drain the reservoir containing the screen wash, and replace it with a seasonal variant throughout the year, which represents significant inconvenience to the user. Due to the inconvenience of replacing screen wash, users often do not change their screen wash and may therefore be left with a screen wash which is susceptible to freezing during colder months. Users may also simply forget to replace the screen wash. Since during the colder months, there is a greater need for windscreens to be cleaned due to additional dirt or other contaminants, such as road salt, being present and also due to the low winter sun, which can exacerbate the problems caused by having a windscreen which is not clean, it is often the case that a summer screen wash is used in the winter. This can cause problems as the screen wash may freeze within the pump or pipes and cause damage or prevent the screen wash being sprayed onto the window at all. If the summer screen wash is sprayed onto the window, in low temperatures, it may freeze and inhibit the view through the window.

Anti-freeze may be provided in a screen wash formulation to prevent freezing thereof. Such anti-freeze components may comprise, for example, ethylene glycol, propylene glycol, methanol or ethanol. However, methanol and ethanol are more volatile than water, and as such, may evaporate from the screen wash during the summer months. As such, if the user does not replace the screen wash following the summer months, the function of the remaining screen wash may be significantly impaired for the colder winter months. Further, ethylene glycol is toxic to humans and many animals and so may present a health risk if consumed. Propylene glycol is more viscous than water and could lead to smearing if used as a screen wash.

Screen wash formulations comprising a surfactant, or an anti-freeze component, may change in formulation over the period of residence in the reservoir, for example by evaporation. Such changes in formulation may enable the proliferation of microbes in the screen wash reservoir, which when sprayed onto the window of a vehicle, may put the user at risk of exposure to said microbes. Such microbial proliferations may be, but are not limited to, Legionnaires' disease. The microbes may also block the narrow pipers and spray outlet used for the screen wash.

Many vehicle users will typically top up their screen wash with tap water, or in some instances distilled water. However, as described above, the formulation of the screen wash may change over time during residence in the reservoir, and as such its function may be impaired. Dilution of existing screen wash in this way further exaggerates the change in formulation of the screen wash, and thus further impairs its function. Dilution of screen wash with water additionally increases the risk of microbes proliferating in the remaining screen wash as it becomes increasingly diluted.

Screen wash may also be provided in a concentrated form, wherein the user dilutes the screen wash concentrate with water to form a screen wash suitable for application to the screen of the reservoir. Such concentrates are diluted up to a 5:1 ratio with water (i.e. 5 parts water to 1 part concentrate) to afford the necessary grade screen wash. Such concentrates are typically provided in 5 litre quantities, which may provide up to 25 litres of screen wash. Screen wash concentrate is thus provided in significant volumes, in part to make sale of the screen wash economically viable as a consequence of its low dilution factor (x 5). Such screen wash concentrates are thus impractical for the user to keep in the car owing to their significant size, cannot easily be poured into the screen wash reservoir, and provide a low amount of screen wash per part of diluted screen wash concentrate.

US 6472356 describes a sanitizing hand cleanser comprising an organic alcohol and silicone based materials. US 8633145 describes methods for removal of cosmetic residue from surfaces. US 3960745 describes cleansing compositions containing a soluble salt of chlorhexidine, a polyoxyethylene-polyoxypropylene block co-polymer and an inert diluent or carrier.

It is an object of the present invention to address one or more of the aforementioned problems.

### Summary of Invention

The present invention provides a screen wash concentrate formulation for use in preparing a screen wash. The screen wash concentrate formulations according to the present invention may be diluted with water to provide screen wash suitable for use. Screen wash concentrate formulations according to the present invention may be diluted with between 20 and 70 parts water to 1 part screen wash concentrate formulation (between 20:1 and 70:1), preferably between 30 and 60 parts water to 1 part screen wash concentrate formulation (between 30:1 and 60:1) and more preferably between 45 and 55 parts water to 1 part screen wash concentrate formulation (between 45:1 and 55:1), to afford screen wash suitable for use. Most preferably, screen wash concentrate formulations according to the present invention may be diluted with around 50 parts water to 1 part screen wash concentrate formulation (50:1) to afford screen wash suitable for use. Advantageously, screen wash concentrate formulations according to the present invention are therefore provided in a highly concentrated format, thus providing the user with a greater volume of screen wash per unit of liquid formulation purchased, and providing the user with a smaller volume of screen wash concentrate which can easily and readily be stored in the vehicle ready for use, for example in a glove compartment. In addition, the screen wash concentrate formulation of the present invention may be added to the screen wash already present in a vehicle to decrease the freezing point of the screen wash in order to prevent freezing. This advantageously removes the need for the user to drain the liquid already present in the screen wash container and replace it with another screen wash appropriate for colder conditions. The skilled person will also appreciate that the screen wash concentrate formulations according to the present invention may also be applied directly to a screen to be cleaned. Advantageously, the screen wash concentrate formulation may perform as a highly concentrated screen wash where the screen to be cleaned is heavily soiled with dirt, particulates, and the like, and may also serve as a de-icer composition.

The screen wash may be prepared by mixing the screen wash concentrate formulation with water, and the resulting mixture is then poured into a screen wash reservoir in a vehicle, ready for use. Alternatively, the screen wash may be prepared by pouring the screen wash concentrate formulation directly into the screen wash reservoir, and topping the reservoir up with water. In the latter instance, the highly concentrated form of the screen wash concentrate formulation, and the subsequent provision of the screen wash concentrate formulation in a smaller volume, enables the user to easily pour the screen wash directly into the screen wash reservoir with greater precision, thereby minimising the risk of spillage.

According to the present invention there is provided a screen wash concentrate formulation for use in preparing a screen wash comprising: 68-76 wt% ethanol, 1-7 wt% of a second alcohol selected from propan-1-ol, and propan-2-ol, 0.01-2 wt% surfactant, at least one preservative comprising an isothiazolinone, and water to balance. The skilled person will appreciate that water to balance refers to adding water to make up the remainder of the formulation to 100%.

Advantageously, the screen wash concentrate is provided with a high percentage weight of alcohol, enabling the screen wash concentrate formulation to be provided in a highly concentrated form for use in preparing a screen wash. The high percentage weight of alcohol advantageously enables the user to vary the degree to which the screen wash is diluted. For example, in the cold winter months, the user may dilute the screen wash with fewer parts water to provide a screen wash with a high alcohol content which will not freeze. In the warmer summer months, the user may dilute the screen wash with more water, and also to provide a greater volume of screen wash per part of screen wash concentrate formulation thus affording greater economic efficiency. Thus advantageously, the provision of a screen wash concentrate formulation according to the present invention allows the user to prepare a screen wash of varying concentration according to the time of year. The user may also wish to prepare a screen wash of a certain concentration if their vehicle is driven in particularly dirty environments. For example, a construction worker's vehicle may have a dirtier windscreen compared to an average motorist, and thus require a stronger concentration of screen wash. The present invention also allows a user to readily lower the freezing point of a screen wash composition in the event of cold weather.

Advantageously, the screen wash concentrate formulation comprises a surfactant for enhanced removal of grime, dirt, or other particulates from a window. The screen wash concentrate formulation comprises a surfactant in sufficient concentration, such that when the screen wash concentrate formulation is diluted to form a screen wash, the resulting surfactant concentration is sufficient to clean the window to which the screen wash is applied. The surfactant may comprise one or more surfactants. The skilled person will understand that the surfactant may be a detergent, dispersant, wetting agent, emulsifier, or a combination thereof. The surfactant may comprise an ionic surfactant and/or a non-ionic surfactant. In some embodiments, the screen wash concentrate formulation according to the present invention comprises 0.1-1 wt% surfactant, optionally 0.1-0.3 wt% surfactant. In some embodiments, the surfactant is selected from alkyl sulphosuccinates, dialkylsulphosuccinates, alkylsulfonates, stearates, fluoroalkylanoates and combinations thereof. Preferably, the surfactant is an ionic surfactant. Preferably, the surfactant is an anionic surfactant.

In some embodiments, the surfactant is an alkyl sulphosuccinate salt and/or dialkylsulphosuccinate salt. In some embodiments, the surfactant is an octyl sulphosuccinate salt, optionally a di-octylsulphosuccinate salt. The skilled person will appreciate that any suitable salt may be provided, such as but not limited to, sodium salts, potassium salts and magnesium salts.

The alcohol provided in the screen wash concentrate formulation may also, in use, enhance the cleaning properties of the prepared screen wash, for example, by dissolving greasy or oily particulates. Alcohol may, for example, be useful in cleaning organic matter deposited on a window by means of, for example, insect impact with the window. Advantageously, screen wash concentrate formulations according to the present invention can be used to provide a screen wash comprising alcohol and a surfactant, thereby providing a plurality of cleaning agents, namely a surfactant and alcohol, within the screen wash. In addition, the high concentration of alcohol provided in the screen wash concentrate formulation according to the present invention advantageously reduces or prevents foaming of the surfactant when the screen wash concentrate formulation is mixed with water to provide a screen wash.

The alcohol is a C₂-C₃ alcohol. The screen wash concentrate formulations according to the presently claimed invention comprise 68-76 wt% ethanol, and 1-7 wt% of a second alcohol selected from propan-1-ol, and propan-2-ol. C₂ to C₃ alcohols advantageously have a low melting point, thus reducing the overall freezing point of not only the screen wash concentrate formulation, but also the screen wash prepared from the screen wash concentrate formulation. They are also non-toxic to humans (relative to, for example, methanol) and are not environmentally damaging. As such, provision of C₂ to C₃ alcohols advantageously prevents the screen wash concentrate formulation and/or the screen wash prepared therefrom from freezing during cold winter months. The skilled person will appreciate that other low boiling point alcohols may also be used in the formulations according to the present invention, such as C₄-C₇ alcohols. Such C₄-C₇ alcohols may include, but are not limited to, butan-1-ol, butan-2-ol, isobutanol, pentan-1-ol, pentan-2-ol, pentan-3-ol, isoamyl alcohol, hexan-1-ol, hexan-2-ol, hexan-3-ol, isohexanol, heptan-1-ol, heptan-2-ol, heptan-3-ol, heptan-4-ol, and isomers thereof.

In addition, the high concentration of alcohol in the screen wash concentrate composition according to the present invention means a screen wash prepared using the screen wash concentrate composition may also have a high alcohol content. Advantageously, the alcohol provided in the screen wash prepared using the screen wash concentrate compositions according to the present invention may act as a de-icer on frozen windscreens and may additionally prevent the screen wash from freezing on the window. A high alcohol concentration also allows for there to be some loss of the alcohol due to evaporation whilst maintaining a suitably low freezing point.

The alcohol comprises a first alcohol and a second alcohol, the first and second alcohols being different. The first alcohol is ethanol. The second alcohol is selected from the second alcohol is selected from propan-1-ol, and propan-2-ol. The screen wash concentrate formulations according to the present invention comprise 68-76 wt% of the first alcohol and 1-7 wt% of the second alcohol, optionally 68-74% of the first alcohol and 1-7 wt% of the second alcohol. In some embodiments, screen wash concentrate formulations according to the present invention comprise optionally 70-74 wt% of the first alcohol and 3-5 wt% of the second alcohol, optionally 70-72 wt% of the first alcohol and 3-5 wt% of the second alcohol. Advantageously, the provision of a first alcohol and a second alcohol, which are different, may manipulate the volatility of the resulting formulation, thereby reducing evaporation of alcohol from the screen wash concentrate formulation and/or the resulting screen wash. For example, the provision of a formulation comprising a lower boiling point alcohol with a higher boiling point alcohol may result in a screen wash concentrate formulation with reduced evaporation of alcohol therefrom. The first alcohol has a lower boiling point than the second alcohol. In some embodiments, the second alcohol is propan-2-ol. The high alcohol composition of the present invention also allows the formulation to be used directly on the windscreen as a deicer.

In some embodiments, the screen wash concentrate formulation according to the present invention further comprises a fragrance. The skilled person will understand that any suitable fragrance may be used, such as citric fruit fragrances, pome fruit fragrances, prunus fruit fragrances, deciduous tree-based fragrances, evergreen tree-based fragrances, and the like. In some embodiments, the fragrance is an ester, terpene, aromatic compound, or combinations thereof. The fragrance may be a cherry scented fragrance, such as, but not limited to, ethyl benzoate, ethyl heptanoate, geranyl butyrate, isobutyl acetate, terpenyl butyrate, ethyl 2-(4-methylphenoxy)acetate, 2-(4-methylphenyl)propan-2-ol or combinations thereof. In some embodiments, the screen wash concentrate formulation comprises less than 0.01-1 wt% fragrance, optionally around 0.4-0.6 wt% fragrance. Advantageously, the fragrance provides the user with a pleasant aroma not only when preparing a screen wash using the screen wash concentrate formulation according to the present invention, but also when applying the prepared screen wash to a window.

The screen wash concentrate formulation according to the present invention further comprises at least one preservative. In some embodiments, the screen wash concentrate formulation comprises 0.01-1 wt% preservative, optionally 0.01-0.2 wt% preservative. The preservative may comprise one or more antimicrobial agents. The preservative comprises an isothiazolinone, preferably a methyl-isothiazolinone and/or a benzyl-isothiazolinone. In some embodiments, the preservative comprises a first preservative and a second preservative, wherein at least one of the first and second preservatives is an isothiazolinone. In some embodiments the first preservative is a methyl-isothiazolinone and the second preservative is a benzisothiazolinone. The skilled person will appreciate that other suitable preservatives may be used. Advantageously, the provision of a preservative prevents the proliferation of microbes in a screen wash prepared using the screen wash concentrate formulation according to the present invention, particularly if the screen wash resides in a screen wash reservoir in a vehicle for an extended period of time. Preferably, the first and second preservatives are provided in substantially equal proportions. The skilled person will understand preservative to mean any suitable agent which prevents degradation of the screen wash concentrate formulation through for example oxidation and/or which preserves the composition of the screen wash concentrate formulation and/or which prevents microbial growth in the screen wash concentrate formulation or a screen wash prepared therefrom.

In some embodiments, the screen wash concentrate formulation according to the present invention further comprises at least one dye. In some embodiments, the dye absorbs light between 350 and 600 nm. In some embodiments, at least one of the dyes is selected from rhodamine dyes, naphthalene dyes, azo dyes, and xanthene dyes. In some embodiments, the screen wash concentrate formulation according to the present invention comprises a dye between 0.001 wt% and 0.01 wt%, optionally between 0.003 wt% and 0.005 wt%. The provision of a dye in the screen wash concentrate formulation provides a screen wash prepared using the screen wash concentrate formulation that is also coloured. As mentioned previously, screen wash reservoirs are typically opaque, preventing light from entering into the interior of the reservoir, and thus making it difficult for the user to ascertain the level of screen wash therein. Advantageously, the user can thus examine the level of screen wash in a screen reservoir in a vehicle, simply by looking into the reservoir and seeing whether coloured screen wash is present.

In some embodiments, the pH of the screen wash concentrate formulation is between pH 8 and pH 12, optionally between pH 8 and pH 10. Advantageously, these pH ranges ensure a suitable pH for a screen wash prepared from the screen wash concentrate formulation, such that efficient cleaning of a screen to which the screen wash is applied is achieved.

In some embodiments, the screen wash concentrate formulation is substantially free of solid particulates. The screen wash may comprise between 0.001 and 1 % v/v, optionally between 0.01 and 0.5 % v/v, or optionally between 0.1 and 0.25% v/v of solid particulates. Advantageously, the screen wash concentrate formulation being substantially free solid particulates prevents smearing of a screen wash prepared from the screen wash concentrate formulation, when applied to a screen to be cleaned. The skilled person will understand solid particulates to mean particles which are suspended in, not dissolved in, the screen wash concentrate formulation.

In some embodiments, the screen wash concentrate formulation further comprises an aversive agent to prevent ingestion thereof. The aversive agent may be a bittering agent such as, but not limited to, denatonium benzoate, denatonium saccharide, or combinations thereof. The screen wash concentrate formulation may comprise between 0.0001 wt% and 0.5 wt% aversive agent, optionally between 0.001 wt% and 0.1 wt%, and optionally between 0.004 wt% and 0.008 wt% aversive agent. It will be appreciate that any suitable concentration of aversive agent may be used.

In some embodiments, the screen wash concentrate formulation according to the present invention is a screen wash concentrate formulation. Advantageously, the screen wash concentrate formulation can also serve as a deicer when applied directly to the windscreen of a vehicle. Since any ice present on the window will be melted by the application of the formulation of the present invention, it will mix with the applied screen wash concentrate formulation and cause it to be diluted. Even so, due to the high level of alcohols present in the formulation, the freezing point will remain depressed and will prevent the liquid from re-freezing on the window. As such, the formulation of the present invention may be used as both a screen wash and a de-icer, thereby avoiding the need for the user to carry separate screen wash and de-icer formulations in their vehicle.

Preferably, the formulation is substantially free of methanol. Preferably, the formulation is substantially free of ethylene glycol. It will be appreciated that there may be trace amounts of such compounds present, but it is desired that the concentration of such compounds is kept as low as reasonably possible.

The invention will be illustrated with reference to the accompanying drawings, in which:

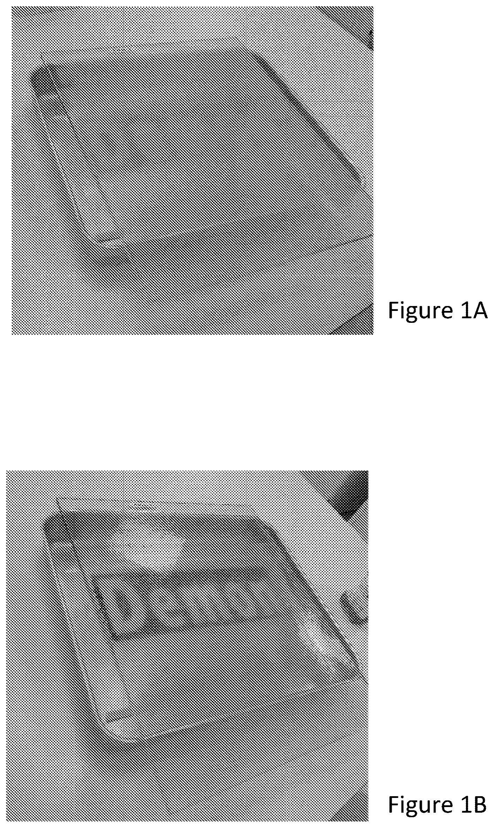

Figure 1A is an image of a pane of glass with frozen water on its front and rear surfaces.
Figure 1B is an image showing the pane of glass of Figure 1A following application of a screen wash concentrate formulation according to the present invention to a front surface of the glass pane.

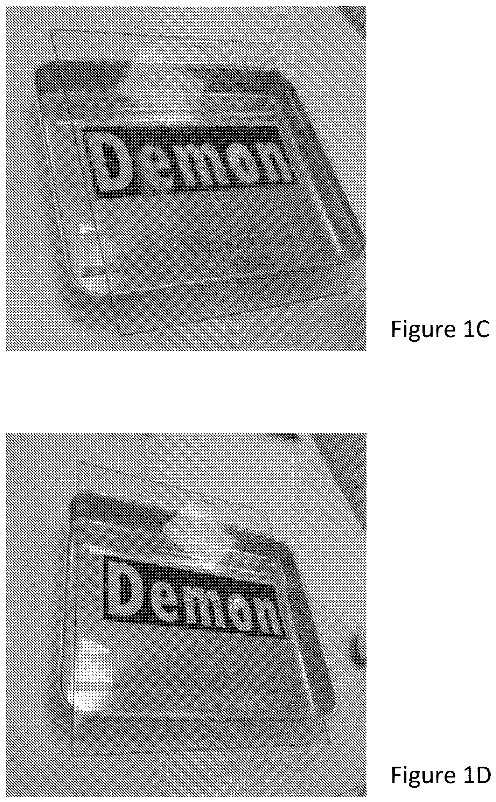

Figure 1C is an image of the pane of glass of Figure 1A and Figure 1B following application of a screen wash concentrate formulation according to the present invention to a rear surface of the glass pane.
Figure 1D is an image of the pane of glass of Figures 1A-1C following removal of residual screen wash concentrate formulation according to the present invention.

### Examples 1 and 2

The preservative properties of screen wash concentrate formulations according the present invention were investigated. Specifically the preservative properties of screen wash concentrate formulations according to the present invention against the growth of aerobic bacteria and sulphate reducing bacteria were investigated. A formulation according to the present invention (Screen wash concentrate Formulation A) and a screen wash prepared using the screen wash concentrate formulation according to the present invention (Screen wash concentrate Fomulation:Water, 1:49) were used as subject samples. In Examples 1 and 2, microbiological growth was visually assessed using a rating scale of 0-6 (0= no bacterial growth; 6= high contamination). The bacterial species investigated included *Alcaligenes faecalis, Pseudomonas aeruginosa, Burkholderia capacia, Pseudomonas putida, Escherichia coli,* and *Staphylococcus aureus.*

### Example 1

The test screen wash concentrate formulation was first evaluated for microbial contamination. Appropriate growth media were streak or stab inoculated with aliquots of test samples and incubated for three days at 30 °C. After incubation microbiological growth was visually assessed using a rating scale of 0-6 (0= no bacterial growth; 6= high contamination) as detailed in Table 1. No contamination of the test screen wash concentrate formulation was observed.

**Table 1 - Screening for microbial contamination**

| Test Sample | Growth Rating On Nutrient Agar (30°C): |
|---|---|
| Screen wash concentrate formulation A | 0 |
| Screen wash concentrate formulation A:Water (1:49) | 0 |

### Example 2

The preservative effects of screen wash concentrate formulation A and a screen wash prepared therefrom against various strains of bacteria was investigated. In addition, the effect of aging (i.e. screen wash concentrate formulation subjected to prolonged warm conditions before use in the experiment) on the preservative effects of the screen wash concentrate formulation and a screen wash prepared therefrom was also assessed. Table 3 (Before ageing) represents data obtained where freshly prepared screen wash concentrate formulation A was employed in the experiment described below. Table 4 (After ageing) represents data obtained where screen wash concentrate formulation A was prepared, and then stored at 40 °C for 4 weeks prior to use in the experiment.

Samples of screen wash concentrate formulation as set out in Tables 3 and 4 were prepared. Bacterial suspensions comprising *Alcaligenes faecalis, Pseudomonas aeruginosa, Burkholderia capacia, Pseudomonas putida, Escherichia coli,* and *Staphylococcus aureus* strains of bacteria were prepared for use as inoculum. A suspension of bacteria more closely resembles the environment in which a screen wash may be found in a vehicle reservoir. The inoculum were inoculated (i.e. treated) with the screen wash concentrate formulation samples on three occasions at weekly intervals. The density of viable bacteria (colony forming units per mL) in the inoculum at each inoculation is shown in Table 2..

**Table 2: Inoculum density**

| **Inoculation** | Before Ageing | After Ageing |
|---|---|---|
| 1^{st} | 1.65 x 10⁸ cfu/mL | 1.9 x 10⁸ cfu/mL |
| 2^{nd} | 1.85 x 10⁸ cfu/mL | 2.0 x 18⁸ cfu/mL |
| 3^{rd} | 1.70 x 10⁸ cfu/mL | 1.9 x 10⁸ cfu/mL |

Following inoculation, the treated inoculum samples were thoroughly mixed, a sample taken therefrom, and streak inoculated onto nutrient media. The streak inoculated nutrient media was then incubated at 30 °C and visually inspected after the indicated number of days. Microbiological growth was visually assessed using a rating scale of 0-6 (0= no bacterial growth; 6= high contamination) on the indicated days as detailed in Table 2 and Table 3. Where bacterial growth was observed (i.e. a rating of 1-6 inclusive), further inspections were carried out on the indicated days until no bacterial growth (rating 0) was observed. No bacterial growth was interpreted as the preservative successfully killing the bacteria and preventing any further growth thereof.

**Table 3: Wet State Bacterial Resistance Test - Before Ageing 30 °C**

| **Test Sample** | **Bacterial Growth Rating (Days After)** | | | |
|---|---|---|---|---|
| | **1^{st} Inoculation** | **2^{nd} Inoculation** | | **3^{rd} Inoculation** |
| | **3** | **1** | **4** | **4** |
| Screen wash concentrate Formulation A | 0 | 0 | | 0 |
| Screen wash concentrate formulation A:H₂O (1:49) | 0 | 1 | 0 | 0 |

**Table 4: Wet State Bacterial Resistance Test - After Ageing 40°C/4 Weeks**

| **Test Sample** | **Bacterial Growth Rating (Days After)** | | | |
|---|---|---|---|---|
| | **1^{st} Inoculation** | **2^{nd} Inoculation** | **3^{rd} Inoculation** | |
| | **3** | **3** | **1** | **6** |
| Screen wash concentrate Formulation A | 0 | 0 | 0 | |
| Screen wash concentrate formulation A:H₂O (1:49) | 0 | 0 | 1 | 0 |

The data presented in Tables 1, 3 and 4 clearly demonstrate the preservative effects of screen wash concentrate formulations according to the present invention, and the preservative effects of a screen wash prepared using the screen wash concentrate formulation according to the present invention with water in a 1:49 ratio.

Advantageously, even following dilution to form the screen wash, the preservative properties are maintained.

Tables 3 and 4 reveal that bacterial growth was negligible in the case where the screen wash concentrate formulation was freshly prepared, and also in the case where the screen wash concentrate formulation was first aged at 40 °C for 4 weeks. As such, these data demonstrate that the preservative remains effective in both the screen wash concentrate formulation, and screen wash prepared therefrom, even if the screen wash concentrate formulation is subject to prolonged periods of storage and elevated temperatures. The skilled person will understand that temperatures of 40 °C may be similar to those experienced by a screen wash in a reservoir in a vehicle, given proximity to the engine.

### Example 3

The use of screen wash concentrate formulations according to the present invention as de-icer was demonstrated by applying the screen wash concentrate formulation to a pane of glass having frozen water on its surface. Figure 1A shows a frozen pane of glass, having frozen water on a front surface and a rear surface. A screen wash concentrate formulation according to the present invention was applied to the frozen glass on the front surface by spraying and left for around 5 seconds. Figure 1B shows the pane of glass following application of the screen wash concentrate composition to the front surface. The screen wash concentrate formulation according to the present invention was applied to the frozen glass the rear surface by spraying and left for around 5 seconds. Figure 1C shows the pane of glass following application of the screen wash concentrate formulation to the rear surface. Residual screen wash concentrate formulation was wiped away from the glass surfaces using a soft cloth. Figure 1D shows the glass fully defrosted and transparent.

## Claims

1. A screen wash concentrate formulation for use in preparing a screen wash comprising:
68-76 wt% ethanol; and
1-7 wt% of a second alcohol, wherein the second alcohol is selected from propan-1-ol, and propan-2-ol;
0.01-2 wt% surfactant;
at least one preservative comprising an isothiazolinone; and
water to balance.

2. A liquid formulation according to claim 1 comprising 70-74 wt% of the first alcohol and 3-5 wt% of the second alcohol.

3. A liquid formulation according to claim 1 or claim 2, wherein the second alcohol is propan-2-ol.

4. A liquid formulation according to any preceding claim comprising 0.1-1 wt% surfactant, optionally 0.1-0.3 wt% surfactant.

5. A liquid formulation according to any preceding claim, wherein the surfactant is an alkyl sulphosuccinate salt.

6. A liquid formulation according to any preceding claim further comprising a fragrance.

7. A liquid formulation according to claim 6 comprising less than 0.01-1 wt% fragrance, optionally around 0.4-0.6 wt% fragrance.

8. A liquid formulation according to any one of claims 1 to 7, comprising 0.01-1 wt% preservative, optionally 0.01-0.2 wt% preservative.

9. A liquid formulation according to any one of claims 1 to 8, wherein the isothiazolinone is selected from methyl-isothiazolinone and benzyl-isothiazolinone

10. A liquid formulation according to any one of claims 1 to 9, wherein the preservative comprises a first preservative and a second preservative, wherein at least one of the first and second preservatives is an isothiazolinone.

11. A liquid formulation according to claim 10, wherein the first preservative is a methyl-isothiazolinone and the second preservative is a benzisothiazolinone.

12. A liquid formulation according to any preceding claim comprising at least one dye.

13. A liquid formulation according to claim 12, wherein at least one of the dyes is selected from rhodamine dyes, naphthalene dyes, azo dyes, and xanthene dyes.

14. A liquid formulation according to any preceding claim comprising an aversive agent to prevent ingestion thereof.

15. A liquid formulation according to claim 14 wherein the aversive agent is selected from denatonium benzoate, denatonium saccharide, or combinations thereof.

## Patentansprüche

1. Scheibenwaschkonzentratformulierung zur Verwendung beim Herstellen eines Scheibenwaschmittels, umfassend:
68-76 Gew.-% Ethanol; und
1-7 Gew.-% eines zweiten Alkohols, wobei der zweite Alkohol aus Propan-1-ol und Propan-2-ol ausgewählt ist;
0,01-2 Gew.-% Tensid;
mindestens ein Konservierungsmittel, das ein Isothiazolinon umfasst; und Wasser als Rest.

2. Flüssigkeitsformulierung nach Anspruch 1, die 70-74 Gew.-% des ersten Alkohols und 3-5 Gew.-% des zweiten Alkohols umfasst.

3. Flüssige Formulierung nach Anspruch 1 oder Anspruch 2, wobei der zweite Alkohol Propan-2-ol ist.

4. Flüssigkeitsformulierung nach einem vorstehenden Anspruch, die 0,1-1 Gew.-% Tensid, optional 0,1-0,3 Gew.-% Tensid umfasst.

5. Flüssigkeitsformulierung nach einem vorstehenden Anspruch, wobei das Tensid ein Alkylsulfosuccinatsalz ist.

6. Flüssigkeitsformulierung nach einem vorstehenden Anspruch, die weiter einen Duftstoff umfasst.

7. Flüssigkeitsformulierung nach Anspruch 6, die weniger als 0,01-1 Gew.-% Duftstoff, optional etwa 0,4-0-,6 Gew.-% Duftstoff umfasst.

8. Flüssigkeitsformulierung nach einem der Ansprüche 1 bis 7, die 0,01-1 Gew.-% Konservierungsmittel, optional 0,01-0,2 Gew.-% Konservierungsmittel umfasst.

9. Flüssigkeitsformulierung nach einem der Ansprüche 1 bis 8, wobei das Isothiazolinon aus Methylisothiazolinon und Benzylisothiazolinon ausgewählt ist.

10. Flüssigkeitsformulierung nach einem der Ansprüche 1 bis 9, wobei das Konservierungsmittel ein erstes Konservierungsmittel und ein zweites Konservierungsmittel umfasst, wobei mindestens eines des ersten und des zweiten Konservierungsmittels ein Isothiazolinon ist.

11. Flüssigkeitsformulierung nach Anspruch 10, wobei das erste Konservierungsmittel ein Methylisothiazolinon und das zweite Konservierungsmittel ein Benzisothiazolinon ist.

12. Flüssigkeitsformulierung nach einem vorstehenden Anspruch, die mindestens einen Farbstoff umfasst.

13. Flüssigkeitsformulierung nach Anspruch 12, wobei mindestens einer der Farbstoffe aus Rhodaminfarbstoffen, Naphthalinfarbstoffen, Azofarbstoffen und Xanthenfarbstoffen ausgewählt ist.

14. Flüssigkeitsformulierung nach einem vorstehenden Anspruch, die ein aversives Mittel umfasst, um deren Einnahme zu verhindern.

15. Flüssigkeitsformulierung nach Anspruch 14, wobei das aversive Mittel aus Denatoniumbenzoat, Denatoniumsaccharid oder Kombinationen davon ausgewählt ist.

## Revendications

1. Formulation concentrée de lave-glace destinée à être utilisée dans la préparation d'un lave-glace comprenant :
68-76 % en poids d'éthanol ; et
1-7 % en poids d'un second alcool, le second alcool étant sélectionné parmi du propan-1-ol et du propan-2-ol ;
0,01-2 % en poids de tensioactif ;
au moins un conservateur comprenant une isothiazolinone ; et de l'eau pour équilibrer.

2. Formulation liquide selon la revendication 1 comprenant 70-74 % en poids du premier alcool et 3-5 % en poids du second alcool.

3. Formulation liquide selon la revendication 1 ou la revendication 2, dans laquelle le second alcool est du propan-2-ol.

4. Formulation liquide selon l'une quelconque des revendications précédentes comprenant 0,1-1 % en poids de tensioactif, facultativement 0,1-0,3 % en poids de tensioactif.

5. Formulation liquide selon l'une quelconque des revendications précédentes, dans laquelle le tensioactif est un sel d'alkylsulfosuccinate.

6. Formulation liquide selon l'une quelconque des revendications précédentes comprenant en outre un parfum.

7. Formulation liquide selon la revendication 6 comprenant moins de 0,01-1 % en poids de parfum, facultativement environ 0,4-0,6 % en poids de parfum.

8. Formulation liquide selon l'une quelconque des revendications 1-7, comprenant 0,01-1 % en poids de conservateur, facultativement 0,01-0,2 % en poids de conservateur.

9. Formulation liquide selon l'une quelconque des revendications 1 à 8, dans laquelle l'isothiazolinone est sélectionnée parmi de la méthyl-isothiazolinone et de la benzyl-isothiazolinone.

10. Formulation liquide selon l'une quelconque des revendications 1 à 9, dans laquelle le conservateur comprend un premier conservateur et un second conservateur, dans laquelle au moins un des premier et second conservateurs est une isothiazolinone.

11. Formulation liquide selon la revendication 10, dans laquelle le premier conservateur est une méthylisothiazolinone et le second conservateur est une benzisothiazolinone.

12. Formulation liquide selon l'une quelconque des revendications précédentes comprenant au moins un colorant.

13. Formulation liquide selon la revendication 12, dans laquelle au moins un des colorants est sélectionné parmi des colorants rhodamine, des colorants naphtalène, des colorants azoïques et des colorants xanthène.

14. Formulation liquide selon l'une quelconque des revendications précédentes comprenant un agent aversif pour empêcher son ingestion.

15. Formulation liquide selon la revendication 14, dans laquelle l'agent aversif est sélectionné parmi du benzoate de dénatonium, du saccharide de dénatonium ou des combinaisons de ceux-ci.
